# EUROPEAN PATENT APPLICATION

(11) **EP 4 488 917 A1**
(43) Date of publication of application: **08.01.2025**
(21) Application number: 22929782.5
(22) Date of filing: 02.03.2022
(51) Int. Cl.: G06Q 30/06

(54) **METHOD AND DEVICE FOR RUNNING VIRTUAL STORE**

(71) Applicant: Tosyo, Inc., Koshigaya-shi, Saitama, 343-0816 (JP)
(72) Inventor: NAKAGAWA, Takafumi, Koshigaya-shi, Saitama 343-0816 (JP); ITO, Souichiro, Koshigaya-shi, Saitama 343-0816 (JP)
(74) Representative: Gulde & Partner
(86) International application number: PCT/JP2022/009001
(87) International publication number: WO 2023/166637

(57) **Abstract**

A virtual store is improved. A method for operating a virtual store uses an image data processing method for handling a product (C) in which a specific image (A) is applied to a specific article (B), a terminal of a virtual store user who intends to purchase or list the product (C), a terminal of a virtual store operator, and a server connected to the Internet.

## Description

### Technical Field

The present invention relates to a method and a device for operating a virtual store. The present invention relates particularly to a method and a device for operating a virtual store, capable of displaying, on a terminal of a user who intends to purchase or list a product printed on various items in a virtual store, a sample image of the product in a state closer to an actual product.

### Background Art

Methods for manufacturing and selling products in which a design and text designated by a purchaser are printed on an item such as clothing, household goods, and stationery with general-purpose images are already widespread. For example, manufacturing and selling systems described in PTLs 1 to 6 below are known.

PTL 1 describes a product selling system for individually manufacturing and selling a custom-made product in which an image published in a book is printed on a desired material.

In a clothing production system disclosed in PTL 2, a printer receives a printing signal regarding a color/pattern desired by a customer from a management computer for each order and prints the color and the pattern on each fabric (original fabric).

In an embroidery system described in PTL 3, a user selects a garment through the Internet, specifies embroidery locations on the garment, and selects an embroidery pattern. An embroidery simulation is imaged in three dimensions. An embroidery pattern control signal is provided over the Internet to a remote embroidery machine, which can automatically embroider the embroidery pattern specified by the user and customized onto an actual garment.

In a made-to-order system for clothing in a retail facility described in PTL 4, a customer selects a figure from a catalog, a computer transmits a printing instruction related to the figure selected by the customer to a printer, and the printer applies colorants to a cloth based on the printing instruction to reproduce the selected figure on the cloth.

PTL 5 describes an umbrella order processing method in which a customer can order an original one-piece umbrella online by designating an image for umbrella fabric.

With these technologies in the related art, even if customers, stores, and manufacturing facilities are far away, by using the Internet and various terminal devices, it is possible to manufacture a wide variety of products in small quantities that meet the needs of individual customers while minimizing the loss of raw materials. Such a made-to-order system is welcomed by customers because the system allows the customers to select products from a wide variety of candidates anytime, anywhere.

However, in such a made-to-order system, in many cases, a customer designates an image from images or printed matter and makes an order without seeing an actual product. In order systems using the Internet, it is generally possible to adjust and confirm a size and an arrangement of an image pattern designated by a customer. However, it is difficult to find detailed information on a finished product, such as texture and feel of cloth products or knits, from an image provided for such adjustment and confirmation. There is a large or small difference between the product state that can be visually recognized with the image or printed matter provided to the customer and the actual finished product. This difference is also affected by an image device used by the customer, customer's psychology (magnitude of imagination and expectations), and the like. For this reason, in some cases, the difference between the product imagined at the time of ordering and the product received exceeds the customer's tolerance, causing customer dissatisfaction.

In particular, a made-to-order T-shirt, in which a design designated by a customer is printed on shirt fabric, is very popular at schools, companies, events, and the like, and is attractive to consumers because of easy ordering using the Internet. However, such a made-to-order T-shirt uses a relatively large-size design that is trendy, has strong messages, and has strong image characteristics, and customers often strongly demand that desired design be reproduced on an actual product. Such made-to-order products with high customer expectations are more likely to cause customer dissatisfaction with finished products.

Therefore, the present applicant has already proposed an image data processing method and an apparatus that enable a customer to more accurately image an actual object when a made-to-order product is manufactured by printing a design designated by the customer on an item such as clothing (PTL 6). However, specific usage forms of the image data processing method and the apparatus are not disclosed here.

### Citation List

### Patent Literature

[PTL 1] Japanese Unexamined Patent Application Publication No. 2003-162644
[PTL 2] Japanese Unexamined Patent Application Publication No. 2006-252402
[PTL 3] Japanese Unexamined Patent Application Publication No. 2001-314677
[PTL 4] PCT Japanese Translation Patent Publication No. 2013-511093
[PTL 5] Japanese Unexamined Patent Application Publication No. 2020-77252
[PTL 6] PCT International Application No. PCT/JP2020/026724

### Summary of Invention

### Technical Problem

Therefore, the present inventor has studied to introduce an innovative image data processing method and an apparatus that has been already proposed by the present applicant into actual commercial transactions.

### Solution to Problem

As a result, the present inventor has conceived of using the image data processing method and the apparatus for an operation of a so-called virtual store. The virtual store mentioned here refers to a product buying and selling environment in which products are displayed and sold on the Internet and payments are made online, without the need for stores or cash transfers and thus stores or cash transactions are not required, and is a buying and selling method also referred to as a "virtual shop" or a "net store". That is, the present invention is as follows.

### (Invention 1)

A method for operating a virtual store by using an image data processing method for handling a product (C) in which a specific image (A) is applied to a specific article (B), a terminal of a virtual store user who intends to purchase or list the product (C), a terminal of a virtual store operator, and a server connected to the Internet, the image data processing method performs the following steps 1 to 5 including (step 1) a step of converting image data (A0) corresponding to the image (A) to acquire image data (A1), (step 2) a step of converting image data (B0) corresponding to the article (B) to acquire image data (B1) corresponding to a surface state of a region of the article (B) on which the image (A) is printed, (step 3) a step of acquiring image data (A2) from the image data (A1) and the image data (B1), (step 4) a step of converting the image data (A2) to acquire image data (A3), and (step 5) a step of acquiring image data (C0) corresponding to the product (C) from the image data (A3) and the image data (B0), and the server displays a sample image of the product (C) on the terminal of the virtual store user based on the image data (C0) obtained by the image data processing method, and transmits and receives information regarding purchase and/or listing of the product (C) between the terminal of the virtual store user and the terminal of the virtual store operator.

### (Invention 2)

The method for operating a virtual store according to Invention 1, in which, in the step 1, a value corresponding to one or more of hue, brightness, chroma, transparency, and sharpness of the image data (A0) corresponding to the image (A) is converted to acquire the image data (A1).

### (Invention 3)

The method for operating a virtual store according to Invention 1, in which, in the step 1, a value corresponding to one or more of brightness, chroma, and transparency of the image data (A0) corresponding to the image (A) is converted to reduce one or more of brightness, chroma, and transparency, thereby acquiring the image data (A1).

### (Invention 4)

The method for operating a virtual store according to Invention 1, in which, in the step 2, the image data (B0) corresponding to the article (B) is converted to acquire the image data (B1) corresponding to unevenness and/or texture of a region of the article (B) to which the image (A) is applied.

### (Invention 5)

The method for operating a virtual store according to Invention 1, in which, in the step 2, color image data included in the image data (B0) corresponding to the article (B) is converted into grayscale image data and/or the image data (B0) is subjected to blurring to acquire the image data (B1) corresponding to unevenness and/or texture of the region of the article (B) on which the image (A) is printed.

### (Invention 6)

The method for operating a virtual store according to Invention 1, in which, in the step 3, the image data (A2) that reflects both the image (A) and a surface state of a region of the article (B) to which the image (A) is applied is acquired from the image data (A1) and the image data (B1).

### (Invention 7)

The method for operating a virtual store according to Invention 1, in which, in the step 3, the image data (A2) that reflects both the image (A) and the region of the article (B) on which the image (A) is printed is acquired from the image data (A1) and the image data (B1).

### (Invention 8)

The method for operating a virtual store according to Invention 1, in which, in the step 4, a value corresponding to one or more of hue, brightness, chroma, transparency, and sharpness of the image data (A2) is converted to acquire the image data (A3).

### (Invention 9)

The method for operating a virtual store according to Invention 1, in which, in the step 4, a value corresponding to one or more of hue, brightness, chroma, transparency, and sharpness of the image data (A2) is converted to increase one or more of brightness, chroma, transparency, and sharpness, thereby acquiring the image data (A3).

### (Invention 10)

The method for operating a virtual store according to Invention 1, in which, in the step 5, the image data (C0) as a sample image of a made-to-order product obtained by applying the image (A) to the article (B) is acquired from the image data (A3) and the image data (B0).

### (Invention 11)

The method for operating a virtual store according to Invention 1, in which the image (A) is selected by the user on the terminal of the user who intends to purchase or list the product (C) in the virtual store.

### (Invention 12)

The method for operating a virtual store according to Invention 1, in which the information regarding purchase and/or listing of the product (C) includes one or more of a size, a quantity, a delivery destination, and a price of the product (C).

### (Invention 13)

The method for operating a virtual store according to Invention 1, in which the article (B) is made of one or more materials selected from a resin, a metal, a ceramic, and a natural material.

### (Invention 14)

The method for operating a virtual store according to Invention 1, in which the article (B) is clothing.

### (Invention 15)

A device for operating a virtual store, including: an image data processing apparatus for handling a product (C) in which a specific image (A) is applied to a specific article (B); a terminal of a virtual store user who intends to purchase or list the product (C); a terminal of a virtual store operator; and a server connected to the Internet, in which the image data processing apparatus has the following devices 1 to 5 including
(device 1) a device converting image data (A0) corresponding to the image (A) to acquire image data (A1),
(device 2) a device converting image data (B0) corresponding to the article (B) to acquire image data (B1) corresponding to a surface state of a region of the article (B) on which the image (A) is printed,
(device 3) a device acquiring image data (A2) from the image data (A1) and the image data (B1),
(device 4) a device converting the image data (A2) to acquire image data (A3), and
(device 5) a device acquiring image data (C0) corresponding to the product (C) from the image data (A3) and the image data (B0), and

the server displays a sample image of the product (C) on the terminal of the virtual store user based on the image data (C0) obtained by the image data processing apparatus, and transmits and receives information regarding purchase and/or listing of the product (C) between the terminal of the virtual store user and the terminal of the virtual store operator.

### (Invention 16)

The device for operating a virtual store according to Invention 15, in which the device 1 converts a value corresponding to one or more of hue, brightness, chroma, transparency, and sharpness of the image data (A0) corresponding to the image (A) to acquire the image data (A1).

### (Invention 17)

The device for operating a virtual store according to Invention 15, in which the device 1 converts a value corresponding to one or more of brightness, chroma, and transparency of the image data (A0) corresponding to the image (A) to reduce one or more of brightness, chroma, and transparency, thereby acquiring the image data (A1).

### (Invention 18)

The device for operating a virtual store according to Invention 15, in which the device 2 converts the image data (B0) corresponding to the article (B) to acquire the image data (B1) corresponding to unevenness and/or texture of a region of the article (B) to which the image (A) is applied.

### (Invention 19)

The device for operating a virtual store according to Invention 15, in which the device 2 converts color image data included in the image data (B0) corresponding to the article (B) into grayscale image data and/or performs blurring on the image data (B0) to acquire the image data (B1) corresponding to unevenness and/or texture of the region of the article (B) on which the image (A) is printed.

### (Invention 20)

The device for operating a virtual store according to Invention 15, in which the device 3 acquires the image data (A2) that reflects both the image (A) and a surface state of a region of the article (B) to which the image (A) is applied, from the image data (A1) and the image data (B1).

### (Invention 21)

The device for operating a virtual store according to Invention 15, in which the device 3 acquires the image data (A2) that reflects both the image (A) and the region of the article (B) on which the image (A) is printed, from the image data (A1) and the image data (B1).

### (Invention 22)

The device for operating a virtual store according to Invention 15, in which the device 4 converts a value corresponding to one or more of hue, brightness, chroma, transparency, and sharpness of the image data (A2) to acquire the image data (A3).

### (Invention 23)

The device for operating a virtual store according to Invention 15, in which the device 4 converts a value corresponding to one or more of hue, brightness, chroma, transparency, and sharpness of the image data (A2) to increase one or more of brightness, chroma, transparency, and sharpness, thereby acquiring the image data (A3).

### (Invention 24)

The device for operating a virtual store according to Invention 15, in which the device 5 acquires the image data (C0) as a sample image of a made-to-order product obtained by applying the image (A) to the article (B), from the image data (A3) and the image data (B0).

### (Invention 25)

The device for operating a virtual store according to Invention 15, in which the image (A) is selected by the user on the terminal of the user who intends to purchase or list the product (C) in the virtual store.

### (Invention 26)

The device for operating a virtual store according to Invention 15, in which the information regarding purchase and/or listing of the product (C) includes one or more of a size, a quantity, a delivery destination, and a price of the product (C).

### (Invention 27)

The device for operating a virtual store according to Invention 15, in which the article (B) is made of one or more materials selected from a resin, a metal, a ceramic, and a natural material.

### (Invention 28)

The device for operating a virtual store according to Invention 15, in which the article (B) is clothing. Advantageous Effects of Invention

In the present invention, even when an actual product (C) to be displayed (listed or advertised) in the virtual store has not yet been manufactured, a sample image that highly reproduces an actual state of the intended product (C) can be acquired. Moreover, in the present invention, the user of the virtual store can change a combination of the image (A) and the article (B) in a made-to-order sense, and a large number of such sample images can be displayed on the terminal of the user within a short period of time. The present invention can solve problems specific to virtual stores, such as "it is difficult to imagine an actual product" and "it takes effort to take photographs to attract attention to the product". According to the present invention, the virtual store in which the user can purchase the product with higher reliability is realized. In addition, according to the present invention, the virtual store that enables the user to list the product with higher predictability is realized.

### Brief Description of Drawings

Fig. 1 is an image diagram for visually understanding image data conversion performed by step 1 and a device 1.
Fig. 2 is an image diagram for visually understanding image data conversion performed by step 2 and a device 2.
Fig. 3 is an image diagram for visually understanding image data conversion performed by step 3 and a device 3.
Fig. 4 is an image diagram for visually understanding image data conversion performed by step 4 and a device 4.
Fig. 5 is an image diagram for visually understanding image data conversion performed by step 5 and a device 5.
Fig. 6 schematically shows a display example of a sales site of a made-to-order T-shirt (C) obtained by printing an image (A) on an article (B). A left side (11) is an example using the present invention. A right side (10) is an example that does not use the present invention.
Fig. 7 schematically shows the image data processing and a processing flow of an image data processing apparatus.
Fig. 8 is an example of an image generated by "data B1" shown in Fig. 7.
Fig. 9 is an example of an image generated by "data A3" shown in Fig. 7. However, due to a format of the drawings, an actual color image is displayed in black and white.
Fig. 10 schematically shows a form in which a user purchases a product using a method and a device for operating a virtual store of the present invention.
Fig. 11 schematically shows a form in which a user lists a product using the method and the device for operating a virtual store of the present invention. Description of Embodiments

A method and a device for operating a virtual store of the present invention use an image data processing method and an apparatus to provide a product sample image in a state closer to an actual object to a user who intends to purchase or list a product by using a virtual store. Hereinafter, the present invention will be described in detail.

### [Image (A), Article (B), Product (C)]

The image data processing method and the apparatus are a method and an apparatus for handling a product (C) in which a specific image (A) is applied to a specific article (B). The specific image (A) is any visible object that can be visually evaluated and identified and has design and information properties. Examples thereof include paintings, photographs, books, printed materials thereof, and digital data thereof displayed on mobile terminals such as PCs and smartphones are included. The specific article (B) is any medium having a surface on which the image (A) can be printed directly or indirectly.

In the case of direct printing, so-called digital printing is performed. Specifically, image data based on image (A) is transmitted to a printer as printing data via the Internet, an intranet communication, or an electronic medium, and the printer controls an output of a colorant such as ink using the received printing data and performs printing corresponding to the desired image (A) on the surface of the article (B). In the case of indirect printing, image data based on the image (A) is transmitted to a printer as printing data via the Internet, an intranet communication, or an electronic medium, and the printer controls an output of a colorant such as ink using the received printing data, performs printing corresponding to the desired image (A) on a laminate base material such as a film or sheet, and allows the resulting printed sheet or film to adhere to the surface of the article (B), with or without an adhesive. The article (B) is not limited as long as the article (B) is a tangible object that can be bought and sold, and may be an artificial object or a natural object, or a composite thereof. A material forming the article (B) may include any of a resin, a metal, a ceramic, or a natural material, and may consist of, for example, paper, cloth, fiber, plastic, wood, glass, ceramic, or a composite of two or more materials selected therefrom.

The product (C) is, for example, a made-to-order product (C) such as garments, shoes, daily necessities, miscellaneous goods, and stationery. Such a made-to-order product is generally reproduced by printing an image in a terminal device or an image selected by a customer from samples on a surface of a general-purpose medium such as garments, shoes, daily necessities, miscellaneous goods, and stationery selected by the customer. The product (C) using the present invention is preferably a made-to-order product (C) in which a desired design (A) is printed on daily necessities or miscellaneous goods (B) made of cloth, and more preferably clothing such as a T-shirt on which a design selected by a customer is printed. When the article (B) made of cloth is used, in many cases, a sample having the design (A) looks different from the design of the made-to-order product (C) that is actually produced. It is difficult for the customer to predict an actual finished made-to-order product (C). Therefore, the image data processing method and the image data processing apparatus of the present invention aim to generate an image of the product (C) that is close to an actual object before printing.

### [Image Data Processing Method/Image Data Processing]

In the present invention, starting from image data (A0) corresponding to the image (A) selected in advance and image data (B0) of the article selected in advance, conversion is performed by devices 1 to 5 performing the following steps 1 to 5 to acquire image data (C0) that generates an image of the product (C) close to an actual object.

### [Step 1/Device 1]

Typically, when the image (A) is printed on a certain medium, vividness and transparency of the original image (A) are slightly lost depending on printing conditions and a usage environment. Therefore, in the present invention, first, in step 1, image data (A1) is caused to approximate a state of the printed image (A).

In step 1, image data (A0) corresponding to the image (A) is converted to acquire image data (A1). Specifically, in step 1, a value corresponding to one or more of hue, brightness, chroma, transparency, and sharpness of the image data (A0) corresponding to the image (A) is converted to acquire the Image data (A1). Variables to be converted and the amount of conversion are appropriately set according to characteristics of the image (A) and the type of the article (B). In a case where the article (B) is made of, for example, paper, cloth, or wood and a shade of the image (A) is reproduced cloudy or dark on the actual product (C), in step 1, a value corresponding to one or more of brightness, chroma, and transparency of the image data (A0) corresponding to the image (A) is converted so as to reduce one or more of brightness, chroma, transparency, and sharpness, thereby acquiring the image data (A1). Conversely, in a case where the article (B) is made of, for example, plastic or glass and the shade of the image (A) is reproduced transparently and brightly on the actual product (C), in step 1, a value corresponding to one or more of brightness, chroma, and transparency of the image data (A0) corresponding to the image (A) is converted so as to increase one or more of brightness, chroma, transparency, and sharpness, thereby acquiring the image data (A1). The conversion in step 1 is appropriately defined according to the combination of the image (A) and the article (B).

In a case where the article (B) is a made-to-order T-shirt, in step 1, a value corresponding to one or more of brightness, chroma, and transparency of the image data (A0) corresponding to the image (A) is converted so as to preferably reduce one or more of brightness, chroma, and transparency or the original image (A) to 80% or less, and more preferably reduce one or more of brightness, chroma, and transparency or the original image (A) to 75% or less, thereby acquiring the image data (A1).

The device 1 that performs step 1 generally has a database, an image data (A0) output unit, a data conversion unit, an image data (A1) output unit, a memory, and a transmission unit. The database stores image data (A0) corresponding to selectable images (A). Based on a signal corresponding to the image (A) input to the image data processing apparatus, the data conversion unit of the device 1 extracts the requested image data (A0) from the database, and converts the image data (A0) according to predetermined conditions to generate image data (A1). The generated image data (A1) is transmitted to the device 3 that performs step 3, which will be described later.

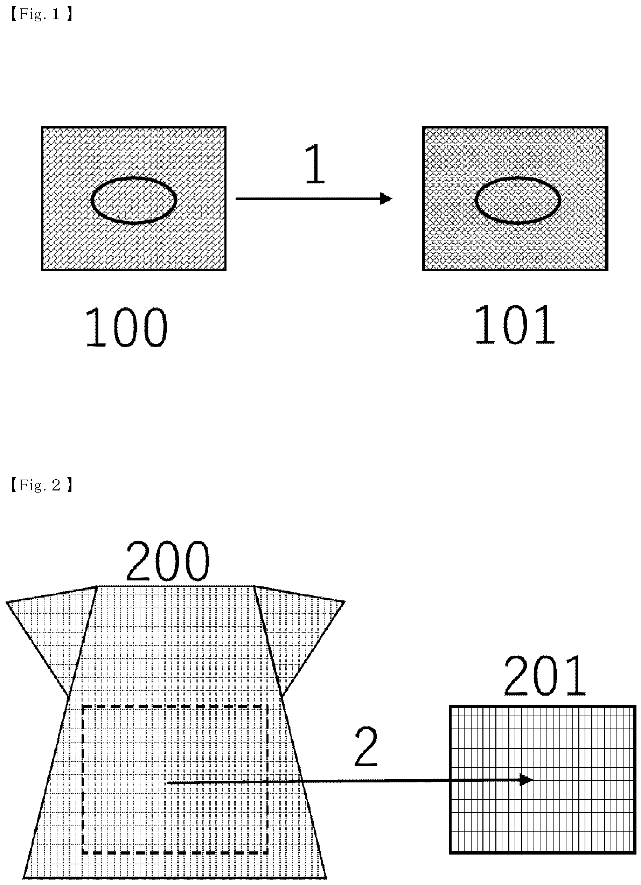

Fig. 1 is an image diagram for understanding step 1 and the device 1. Fig. 1 corresponds to a case where the values of brightness, chroma, and transparency of the image data (A0) are converted in step 1 and the device 1 so as to reduce one or more of brightness, chroma, and transparency, thereby generating the image data (A1). In the present invention, it is not necessary to actually display an image (101) generated by the image data (A1). However, for convenience, Fig. 1 schematically shows an image (A) (100) and the image (101) generated by the image data (A1). When the image (101) and the image (A) (100) are compared to each other, the image (101) appears to have a slightly darker and muddy shade compared to the image (A) (100).

### [Step 2/Device 2]

Step 2 is a necessary step for reflecting an appearance of the actual product (C) in the image data (A1) acquired in step 1.

In step 2, the image data (B0) corresponding to the article (B) is converted to acquire image data (B1) corresponding to a surface state of a region of the article (B) on which the image (A) is printed. Specifically, in step 2, the image data (B0) corresponding to the article (B) is converted to acquire the image data (B1) corresponding to unevenness and/or texture of a region of the article (B) to which the image (A) is applied. In a case where the article (B) is made of a flexible material such as paper or cloth, or a material having a low glossiness such as wood or ceramic, in step 2, typically, color image data included in the image data (B0) corresponding to the article (B) is converted into grayscale image data and/or the image data (B0) is subjected to blurring to acquire the image data (B1) corresponding to unevenness and/or texture of the region of the article (B) on which the image (A) is printed. By using both the conversion to grayscale image data and the blurring, flexibility, degree of matte, moistness, and the like of the surface of the article (B) can be reflected in the image data (B1). Methods of the conversion to grayscale image data and the blurring are appropriately defined according to the material and shape of the article (B).

The device 2 that performs step 2 generally has a database, an image data (B0) output unit, a data conversion unit, an image data (B1) output unit, a memory, and a transmission unit. The database stores the image data (B0). The image data (B0) includes color image data corresponding to a color tone of the article (B). The color image data includes a value corresponding to a protruding portion (convex portion that looks bright) on the surface of the article (B) and a value corresponding to a recessed portion (concave portion that looks dark) on the surface of the article (B). Generally, in the image data (B0), R, G, and B values are allocated to one pixel as the color image data.

A distribution of color image data corresponding to the entire region of the article (B) is generated to correspond to wrinkles and roughness of the actual article (B). Based on the signal corresponding to the image (A) input to the image data processing apparatus, the data conversion unit of the device 2 extracts a data set corresponding to a region of the article (B) in which the image (A) is arranged from the image data (B0), and converts color image data included in the data set into grayscale image data according to predetermined conditions. Generally, R, G, and B values included in the color image data are converted into one grayscale value. A conversion method and a correction method belonging to the conversion are appropriately defined according to the characteristics of the image (B). Typically, grayscale data corresponding to the protruding portion (convex portion that looks bright) on the surface of the article (B) is closer to a white value, and grayscale data corresponding to the recessed portion (concave portion that looks dark) on the surface of the article (B) is closer to a black value. In this manner, image data (B1) including the grayscale image data is generated.

The data conversion unit can further perform blurring on the data set corresponding to the region of the article (B) in which the image (A) is disposed. By performing both the conversion to grayscale image data and the blurring, the grayscale data closer to the white value and the grayscale data closer to the black value included in the image data (B1) to be generated are adjusted to correspond to a state in which the protruding portion (convex portion that looks bright) and the recessed portion (concave portion that looks dark) on the surface of the article (B) are smoothly continuous and achieve a fine distribution.

The image data (B1) subjected to the blurring is suitable in a case where the article (B) is made of a relatively thin fabric, for example, a T-shirt. By using both the grayscale image data and the blurring, fine unevenness, slopes, and smoothness found in T-shirt fabric and the texture of the fabric that these bring can be reflected in the image data (B1). In step 2 and the device 2, the generated image data (A1) is transmitted to the device 3, which will be described later.

Fig. 2 is an image diagram for understanding step 2 and the device 2. Fig. 2 corresponds to a case where the color image data included in the image data (B0) corresponding to the article (B) is converted into grayscale image data and subjected to blurring in step 2 and the device 2. In the present invention, it is not necessary to actually display an image (201) generated by the image data (B1). However, for convenience, Fig. 2 schematically shows an image (200) generated by the image data (B0) of the article (B) and the image (201) generated by the image data (B1). The image (200) corresponds to colors of the article (B), while the image (201) is limited to the region of the selected image (A) and is a black and white image.

### [Step 3/Device 3]

Step 3 corresponds to a first synthesizing step of an image corresponding to the image (A) and an image corresponding to the article (B).

In step 3, image data (A2) is acquired from the image data (A1) and the image data (B1). That is, in step 3, the image data (A2) that reflects both the image (A) and the surface state of the region of the article (B) to which the image (A) is applied is acquired from the image data (A1) and the image data (B1). In a case where a product (C) in which an image (A) is printed on an article (B) is requested, in step 3, the image data (A2) that reflects both the image (A) and the surface state of the region of the article (B) on which the image (A) is printed is acquired from the image data (A1) and the image data (B1).

The device 3 that performs step 3 generally has a data conversion unit, an image data (A1) and image data (B1) output unit, an image data (A2) output unit, a memory, and a transmission unit. The memory stores the image data (A1) and the image data (B1). The data conversion unit of the device 3 synthesizes the output image data (A1) and the image data (B1) by a predetermined program to generate the image data (A2). The acquired image data (A2) is transmitted to the device 4, which will be described later.

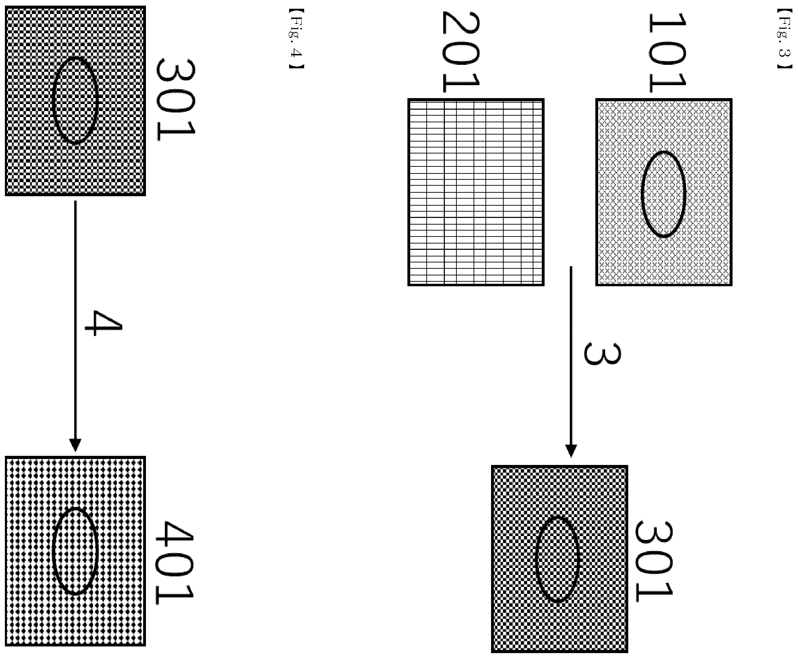

Fig. 3 is an image diagram for understanding step 3 and device 3. Fig. 3 corresponds to a case where the image data (A2) that reflects both the image (A) and the surface state of the region of the article (B) on which the image (A) is printed is acquired from the image data (A1) and the image data (B1) in step 3 and the device 3. In the present invention, it is not necessary to actually display an image generated by the image data (A2). However, for convenience, Fig. 3 schematically shows the image (101) generated by the image data (A1), the image (201) generated by the image data (B1), and an image (301) generated by the image data (A2). In the image (301), colors of the image (101) and black and white/gray of the image (201) can be visually recognized.

### [Step 4/Device 4]

Step 4 corresponds to a step of correcting the image data (A2) obtained in step 3. In a case where color image data is converted into grayscale data, generally, data values of colors that actually look vivid or bright may be converted to data values corresponding to black or dark gray. Therefore, the grayscale data generated in step 2 does not necessarily completely match brightness and darkness that can be visually recognized on the article (B).

Therefore, in Step 4, the image data (A2) is converted to acquire the image data (A3). Specifically, in step 4, a value corresponding to one or more of hue, brightness, chroma, transparency, and sharpness of the image data (A2) is converted to acquire the image data (A3). For example, in step 4, a value corresponding to one or more of hue, brightness, chroma, transparency, and sharpness of the image data (A2) is converted so as to increase one or more of brightness, chroma, transparency, and sharpness, thereby acquiring the image data (A3).

The device 4 that performs step 4 generally has a data conversion unit, an image data (A2) output unit, an image data (A3) output unit, a memory, and a transmission unit. The data conversion unit of the device 4 converts the output image data (A2) using a predetermined program to generate the image data (A3). The acquired image data (A3) is transmitted to the device 5, which will be described later.

Fig. 4 is an image diagram for understanding step 4 and the device 4. Fig. 4 corresponds to a case where a value corresponding to brightness and chroma of the image data (A2) is converted to increase brightness and chroma in step 4 and the device 4, thereby generating the image data (A3). In the present invention, it is not necessary to actually display an image (401) generated by the image data (A3). However, for convenience, Fig. 4 schematically shows the image (301) generated by the image data (A2), and the image (401) generated by the image data (A3). The image (401) will appear brighter and more vivid than the image (301). However, a stereoscopic effect observed in the image (301) is also maintained in the image (401). The image (401) reproduces the appearance of the image (A) in the state in which the image (A) is applied (typically printed) onto the article (B).

### [Step 5/Device 5]

Step 5 is a step for generating an image for predicting the product (C) in which the image (A) is applied (typically printed) onto the article (B).

In step 5, image data (C0) corresponding to the product (C) is acquired from the image data (A3) and the image data (B0). Specifically, in step 5, the image data (C0) as a sample image of a made-to-order product obtained by applying the image (A) to the article (B) is acquired from the image data (A3) and the image data (B0). In a case where a clothing product (C) in which the image (A) is printed on the article (B) is requested, in step 5, the image data (C0) as a sample image of a made-to-order clothing product obtained by printing the image (A) on the article (B) is acquired from the image data (A3) and the image data (B0).

The device 5 that performs step 5 generally has a data conversion unit, an image data (A3) and image data (B0) output unit, an image data (C0) output unit, and a memory. The data conversion unit of the device 5 synthesizes the output image data (A3) and image data (B0) by a predetermined program to generate the image data (C0). An image generated by the image data (C0) can be displayed by transmitting the acquired image data (C0) to a display device separately provided or connected to the image data processing apparatus. The image displayed here is used to provide a sample of the product (C) for manufacturing or selling the product (C).

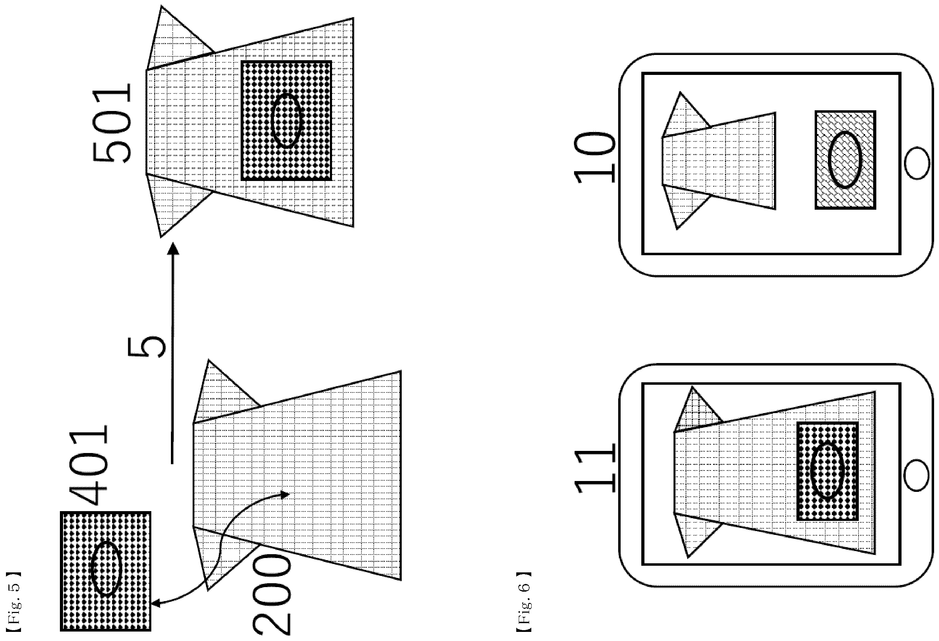

Fig. 5 is an image diagram for understanding step 5 and the device 5. Fig. 5 corresponds to a case where the present invention is used to manufacture and sell a made-to-order shirt (C) obtained by printing an image (A) on an article (B). In step 5 and the device 5, the image data (A3) and the image data (B0) are synthesized to acquire the image data (C0) as a sample image. An image (501) is generated from the image data (C0). The image (501) is treated as a sample image of the made-to-order shirt (C).

### [Terminal/Server]

In the virtual store intended by the present invention, the user can browse and purchase products using a terminal connected to the Internet. In addition, in the virtual store intended by the present invention, the user can list and sell products using the terminal connected to the Internet. In the present invention, the product (C) in which the specific image (A) is applied to the specific article (B) is treated as a product in the virtual store. The terminal means all devices that can be connected to the Internet, and may be any model of a smartphone, a tablet, a PC, or the like.

In the present invention, information regarding products, purchase, and listing is transmitted and received between terminals of users via a server, and such transmission and reception are preferably performed in a so-called "chatbot" manner. The so-called chatbot manner is welcomed by users who uses smartphones as the terminals connected to the Internet.

### [Purchase]

The user of the virtual store of the present invention selects the image (A) and the article (B) on the terminal connected to the Internet, and requests a sample image of the product (C) as a target from the server. The image (A) may be an image displayed on the terminal of the user by the server based on data provided by the virtual store, or may be data stored separately as a personal property of the user in the terminal of the user or in various clouds. For example, the user selects an image of a landscape (sea) taken during a trip as the image (A), selects a T-shirt as the article (B), and requests a sample image of a T-shirt (C) on which a photograph of the sea is printed. In this case, for example, when the user touches a "view product sample" button, the server receives a product (C) sample image request signal.

In response to the above request of the user, the server acquires the image data (C0) by steps 1 to 5 and the devices 1 to 5 described above using the image data processing method and the apparatus. The server transmits the sample image data of the product (C) based on the image data (C0) to the terminal of the virtual store user. In this manner, the sample image of the product (C) based on the image data (C0) is displayed on the terminal of the virtual store user. Since the sample image displayed on the terminal reflects wrinkles and unevenness of the T-shirt, the virtual store user can examine quality of the product as if he/she is looking at an actual object.

When the user decides to purchase the product (C) and touches a "purchase" button on a terminal screen, for example, the server of the present invention detects an order of the product (C), and then causes information regarding the purchase of the product (C) to be transmitted and received between the terminal of the virtual store user and the terminal of the virtual store operator. The user can transmit information regarding a size, a quantity, and a delivery destination of the product (C) to be purchased to the server together with a purchase decision notification. For example, in a case in which the user orders the T-shirt (C) printed with the photograph of the sea for a parent and a child to wear together, "1 L size", "1 S size", "price: 5000 + 3000 = 8000 yen", "delivery to one location", and the like are transmitted and received as the purchase information.

The server performs various data communications such that payment is made from the virtual store user to the virtual store operator in accordance with a payment method selected by the user. The user completes the payment by the payment method selected by the user, and the virtual store operator acquires sales money of the product. In addition, the virtual store operator delivers the actual object of the product according to delivery conditions selected by the user. In this manner, product selling using the method and device for operating a virtual store of the present invention is completed.

### [Listing]

The user of the virtual store can display, sell, and manufacture the product (C) intended by the user of the virtual store by using the method and the device for operating a virtual store of the present invention. For example, the present invention is useful in a case where the user is a designer and wants to manufacture and sell unique products by using various design drawings created by the user as materials for various products.

In the present invention, such a user (designer) does not need to prototype a final product in advance. The user uploads images of the design drawings created by the user onto the server from the terminal connected to the Internet. The server of the present invention registers the uploaded design image as one of the images (A). A user who visits the virtual store can purchase a product (C) in which the design image (A) is combined with the article (B).

For example, the user (designer) may want to sell tableware printed with a design drawing of a cat created by the user (designer) and may list the tableware in the virtual store of the present invention. The user (designer) uploads an image of the cat design to the server of the present invention, selects tableware on which the user (designer) wants to print the design, and transmits selection information to the server. As a result, a design image (A) of the cat (cat image (A)) and a limited article (B): a mug, glass, or plate are registered in association with each other on the server of the present invention.

In the present invention, a sample image of a product (C): a mug, glass, or plate with the cat, in which the cat image (A) is printed on the article (B), is displayed on the terminal of the user (designer). The user (designer) examines and confirms an expected finished product (C) on the terminal display and then decides to list the product (C). For example, when the user (designer) touches a "list under this condition" button on the terminal screen, the cat image (A), and the article (B): the mug, glass, or plate associated with the cat image (A) are registered on the server as a material that can be provided to the user of the present invention. The user (designer) does not need to make a prototype of the product in which the cat image (A) is used or to photograph the prototype.

In a case where the user who visits the virtual store of the present invention and wants to purchase and use the product selects the cat image (A) as the image (A), only the mug, glass, and plate are displayed as the articles (B) that can be combined. In accordance with the selection of the user, in the present invention, a sample image of any one of the products (C): the mug, the glass, and the plate with the cat is displayed on the terminal of the user. The user can purchase any of the products (C): the mug, the glass, and the plate with the cat. In order to deliver the product (C): the mug, the glass, and the plate with the cat to the user, the server of the present invention causes information regarding payment, delivery, and deposit to be transmitted and received between the terminal of the user and the terminal of the virtual store operator as described above. Furthermore, the server of the present invention causes information regarding listing commission and sales money to be transmitted and received between the user (designer) and the terminal of the virtual store operator.

In the present invention, the image data (C0) of the product (C) (for example, the mug, glass, and the plate with the cat) requested by the user (designer) can be used on a platform of another virtual store designated by the user (designer) by the above-described image data processing method and the apparatus. In this case, the method and the device for operating a virtual store of the present invention lists and sells the product (C) in the virtual store on behalf of the user (designer) and collects the sales money. The server of the present invention causes information regarding price or a payment method to be transmitted and received between the terminal of the user (designer) and the terminal of the virtual store operator such that a profit share of the user (designer) is paid from the sales money received by the virtual store operator.

In this case, the method and the device for operating a virtual store of the present invention provide sample image with good quality to the user (designer) and access to the virtual store platform on behalf of the user. Currently, each virtual store has different specifications for seller information registration, communication methods with purchaser, and payment information registration, and sellers need to perform individual operations according to each specification. With the method and the device for operating a virtual store of the present invention, the user (designer) does not need to worry about such a difference in individual environment.

### [Effect]

Fig. 6 is an image diagram for understanding that the image (501) is effective as a sample image. Fig. 6 shows a display of a made-to-order T-shirt sales site obtained by printing the image (A) on the article (B). In a case (10) where the image data processing method and the image data processing apparatus are not used, the customer looks at the image (A) and an image (B0) of the article (B), imagines a finished shirt, and makes an order. It is difficult to accurately predict texture and a color tone of an actual shirt just by looking at the image (A) and the image (B0). On the other hand, in a case (11) where a sample image of a made-to-order T-shirt is displayed using the image data processing method and the image data processing apparatus, the texture and the color tone of the finished T-shirt are relatively accurately predicted. By providing such a sample image, it is possible to improve the customer's purchasing desire and a level of satisfaction with the product.

Such a sample image is useful for both the user who intends to purchase the product in the virtual store and the user who intends to sell the product in the virtual store.

With the method and the device for operating a virtual store of the present invention, the production of an actual product is limited to a time when the order for the product is confirmed, and there is no risk of holding a prototype or a display product as an unsold product. With the method and the device for operating a virtual store of the present invention, a purchaser of a product can select a product to be purchased with a reliability close to a case of a real store, and a seller of the product can decide on a product to be listed with a predictability close to a case of a real store. In particular, by using the method and the device for operating a virtual store of the present invention, the seller of the product, particularly the user (designer) who creates the material of the product can reduce work other than main business, such as prototyping of the complete product using the material of the product or image creation, and as a result, it is possible to expect an increase in profit by utilizing the virtual store in which images are emphasized.

Moreover, the method and the device for operating a virtual store of the present invention also enable one-stop online settlement for the payment by the purchasing user and for the profit distribution to the listing user, thereby realizing efficient and highly satisfactory transactions for both the seller and the purchaser.

Furthermore, in a case where the method and the device for operating a virtual store of the present invention use a method (so-called chatbot) by which virtual store users can transmit and receive information in the form of chat, the users can purchase and list products anytime and anywhere while referring to sample images that are close to actual objects.

By using the present invention, the virtual store can meet the needs of recent purchasers and producers, who "want to leave memories of a trip in personal items", "want to manufacture or purchase unique souvenirs in small lots", and "want to commercialize my artwork with a minimum initial investment".

### Example

### [Sample Image of Made-to-Order T-Shirt]

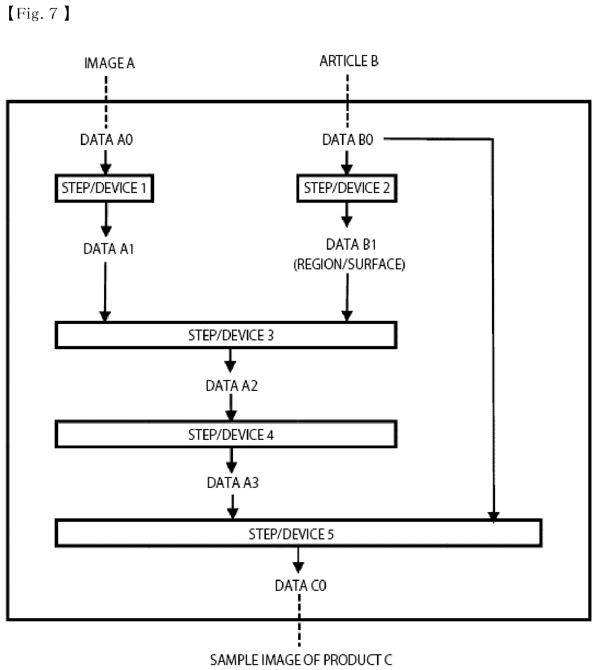

Fig. 7 schematically shows the image data processing and a processing flow of the image data processing apparatus. Steps 1 to 5 shown in Fig. 7 were performed to manufacture and sell made-to-order T-shirts on which a color landscape photograph was printed.

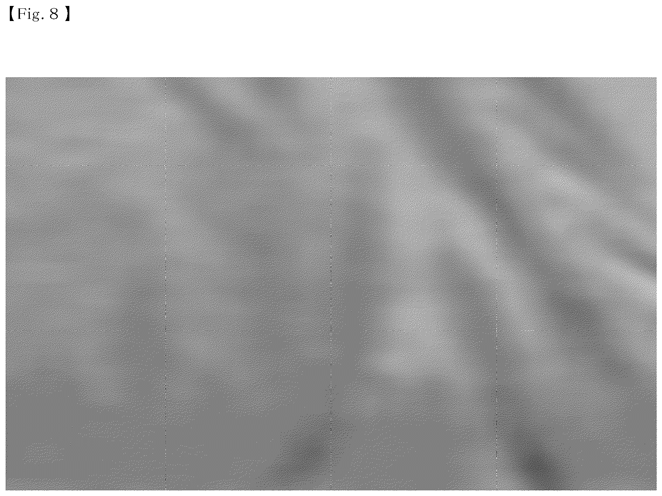

Fig. 8 is an image generated by "data B1" acquired in step 2 and the device 2 shown in Fig. 7. In this image, a color tone of an original T-shirt has been changed to black and white/gray generated by grayscale data.

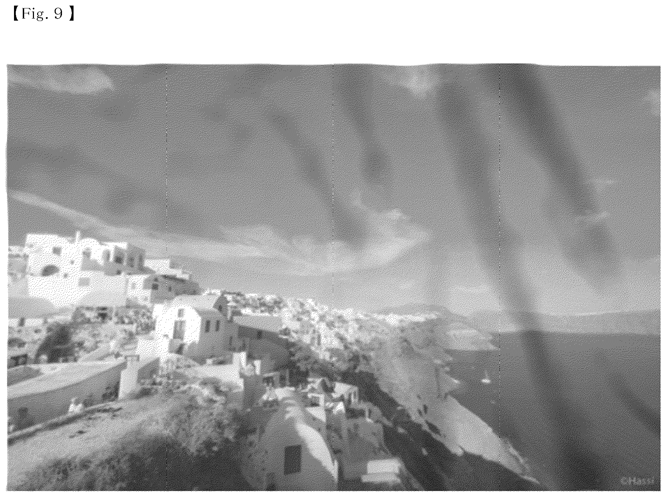

Fig. 9 is an image generated by "data A3" shown in Fig. 7. However, in the specification, an actual color image is displayed in a black and white mode. This image reproduces a state in which a color landscape photograph is printed on a finished T-shirt. This image also expresses shadows caused by wrinkles and curves of the T-shirt. A sample image of a made-to-order T-shirt is displayed using "data C" obtained by synthesizing this image with a T-shirt image. The sample image allows a customer or manufacturer to almost accurately predict a printed portion of the finished T-shirt.

### [Purchase of Product in Virtual Store]

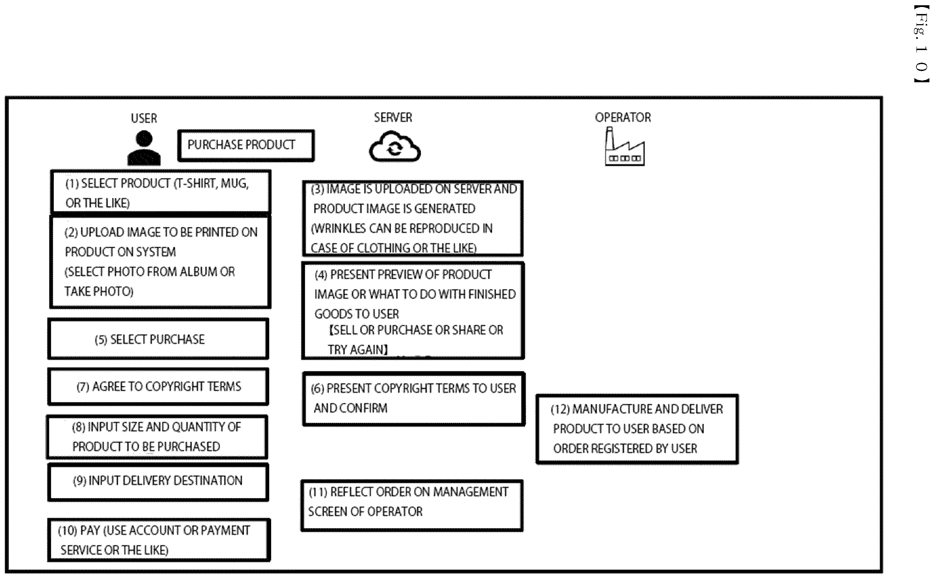

Fig. 10 schematically shows a form in which a user purchases a product using the method and the device for operating a virtual store of the present invention. Numbers in parentheses in Fig. 10 indicate the order of the processing.

In this example, the user selects a photograph as the image (A) and selects a T-shirt as the article (B), and requests a sample image of the product (C) from the terminal connected to the Internet. The image (A) may be an image stored in the terminal or on a cloud by the user or an image transmitted to the terminal of the user by the server specified in the present invention. In response to the request of the user, image data of the image (A) and image data of the article (B) are processed to generate sample image data of the T-shirt (C), and the sample image of the T-shirt (C) is displayed on the terminal of the user. The user who is satisfied with the sample image of the T-shirt (C) transmits a message of agreement to terms of use of the virtual store (for example, an agreement on the copyright terms), an order message, an order quantity, the number of orders, a delivery destination address, a payment method, and the like to the server in a chatbot manner. The operator of the virtual store receives purchase information from the terminal connected to the Internet, and arranges for the manufacture, delivery, and collection of the actual product of the T-shirt (C). In this example, the user is provided with a wide range of choices of the image (A) and thus can order the T-shirt (C) in a so-called made-to-order sense. The actual product of the T-shirt (C) is started to be produced after the product order is placed, but the user can decide to purchase after examining a sample image that accurately reproduces the above actual product. Therefore, using the method and the device for operating a virtual store of the present invention, virtual products can be provided to customers as "the product only for the customer" without having unnecessary stock.

### [Listing of Product in Virtual Store]

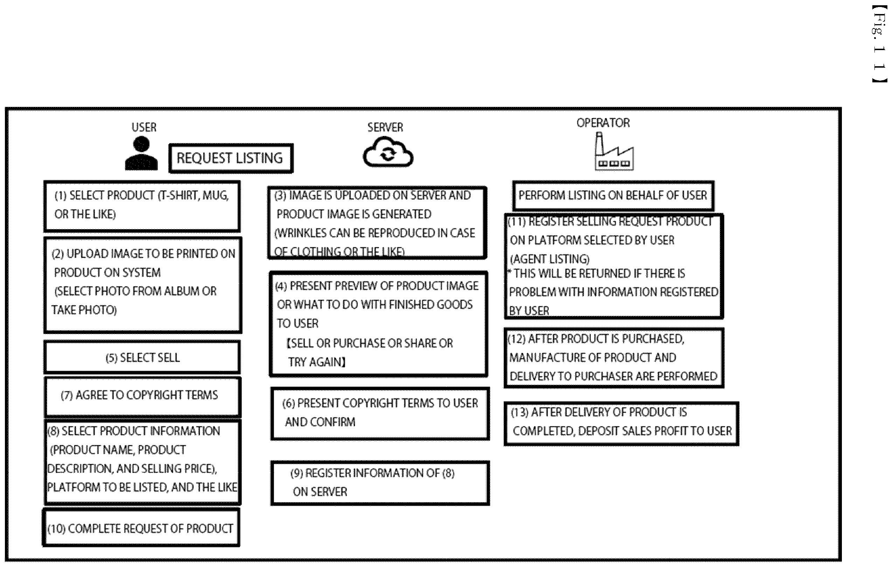

Fig. 11 shows a form in which a user lists a product using the method and the device for operating a virtual store of the present invention. Numbers in parentheses in Fig. 11 indicate the order of the processing.

In this example, the user selects a photograph owned by the user as the image (A), selects a T-shirt as the article (B), and requests a sample image of the product (C) from the terminal connected to the Internet. In response to the request of the user, the server processes image data of the image (A) and image data of the article (B) to generate sample image data of the T-shirt (C), and displays the sample image of the T-shirt (C) on the terminal of the user. The user who is satisfied with the sample image of the T-shirt (C) transmits a message of agreement to terms of use of the virtual store (for example, an agreement on the copyright terms), a listing message, the name of the virtual store, a listing quantity, the number of listings, price, a payment method, and the like to the server in a chatbot manner. The operator of the virtual store receives desired-to-be-listed information from the terminal connected to the Internet, and lists (uploads) the T-shirt (C) to the virtual store designated by the user on behalf of the user. In the virtual store platform, the sample image of the T-shirt (C) can be viewed. In a case where an order is placed for the listed T-shirt (C), an operator of the virtual store that has listed the T-shirt (C) (which may be different from the operator of the platform on which the T-shirt (C) has actually been listed) on behalf of the user, and arranges for the manufacture, delivery, and collection of the actual product. In this example, the user is provided with a wide range of choices of the image (A) and thus can list a so-called "one-of-a-kind" T-shirt (C). The actual product of the T-shirt (C) is started to be produced after the product order is placed, and the user does not need to make a prototype of the actual product. Therefore, the method and the device for operating a virtual store of the present invention realize an environment in which unique products are bought and sold without generating unnecessary stock.

### Industrial Applicability

According to the present invention, the product sample image provided to the user by the virtual store is close to the image of the actual product, and as a result, the reliability of the product of the virtual store is increased. Moreover, according to the present invention, not only the convenience of the virtual store user who intends to purchase the product but also the convenience of the virtual store user who intends to list the product is improved. It is expected that the number of users of the virtual store will be further increased and a virtual store market and online business industry will be further stimulated by the present invention.

### Reference Signs List

1: step 1, device 1
100: image (A)
101: image generated by image data (A1)
2: step 2, device 2
200: image generated by image data (B0)
201: image generated by image data (B1)
3: step 3, device 3
301: image generated by image data (A2)
4: step 4, device 4
401: image generated by image data (A3)
5: step 5, device 5
501: image generated by image data (C0)
10: sample display without using the image data processing method and the image data processing apparatus
11: sample display using the image data processing method and the image data processing apparatus

## Claims

1. A method for operating a virtual store by using an image data processing method for handling a product (C) in which a specific image (A) is applied to a specific article (B), a terminal of a virtual store user who intends to purchase or list the product (C), a terminal of a virtual store operator, and a server connected to the Internet,
wherein the image data processing method performs the following steps 1 to 5 including
(step 1) a step of converting image data (A0) corresponding to the image (A) to acquire image data (A1),
(step 2) a step of converting image data (B0) corresponding to the article (B) to acquire image data (B1) corresponding to a surface state of a region of the article (B) on which the image (A) is printed,
(step 3) a step of acquiring image data (A2) from the image data (A1) and the image data (B1),
(step 4) a step of converting the image data (A2) to acquire image data (A3), and
(step 5) a step of acquiring image data (C0) corresponding to the product (C) from the image data (A3) and the image data (B0), and
the server displays a sample image of the product (C) on the terminal of the virtual store user based on the image data (C0) obtained by the image data processing method, and transmits and receives information regarding purchase and/or listing of the product (C) between the terminal of the virtual store user and the terminal of the virtual store operator.

2. The method for operating a virtual store according to claim 1,
wherein, in the step 1, a value corresponding to one or more of hue, brightness, chroma, transparency, and sharpness of the image data (A0) corresponding to the image (A) is converted to acquire the image data (A1).

3. The method for operating a virtual store according to claim 1,
wherein, in the step 1, a value corresponding to one or more of brightness, chroma, and transparency of the image data (A0) corresponding to the image (A) is converted to reduce one or more of brightness, chroma, and transparency, thereby acquiring the image data (A1).

4. The method for operating a virtual store according to claim 1,
wherein, in the step 2, the image data (B0) corresponding to the article (B) is converted to acquire the image data (B1) corresponding to unevenness and/or texture of a region of the article (B) to which the image (A) is applied.

5. The method for operating a virtual store according to claim 1,
wherein, in the step 2, color image data included in the image data (B0) corresponding to the article (B) is converted into grayscale image data and/or the image data (B0) is subjected to blurring to acquire the image data (B1) corresponding to unevenness and/or texture of the region of the article (B) on which the image (A) is printed.

6. The method for operating a virtual store according to claim 1,
wherein, in the step 3, the image data (A2) that reflects both the image (A) and a surface state of a region of the article (B) to which the image (A) is applied is acquired from the image data (A1) and the image data (B1).

7. The method for operating a virtual store according to claim 1,
wherein, in the step 3, the image data (A2) that reflects both the image (A) and the region of the article (B) on which the image (A) is printed is acquired from the image data (A1) and the image data (E1).

8. The method for operating a virtual store according to claim 1,
wherein, in the step 4, a value corresponding to one or more of hue, brightness, chroma, transparency, and sharpness of the image data (A2) is converted to acquire the image data (A3).

9. The method for operating a virtual store according to claim 1,
wherein, in the step 4, a value corresponding to one or more of hue, brightness, chroma, transparency, and sharpness of the image data (A2) is converted to increase one or more of brightness, chroma, transparency, and sharpness, thereby acquiring the image data (A3).

10. The method for operating a virtual store according to claim 1,
wherein, in the step 5, the image data (C0) as a sample image of a made-to-order product obtained by applying the image (A) to the article (B) is acquired from the image data (A3) and the image data (B0).

11. The method for operating a virtual store according to claim 1,
wherein the image (A) is selected by the user on the terminal of the user who intends to purchase or list the product (C) in the virtual store.

12. The method for operating a virtual store according to claim 1,
wherein the information regarding purchase and/or listing of the product (C) includes one or more of a size, a quantity, a delivery destination, and a price of the product (C).

13. The method for operating a virtual store according to claim 1,
wherein the article (B) is made of one or more materials selected from a resin, a metal, a ceramic, and a natural material.

14. The method for operating a virtual store according to claim 1**,**
wherein the article (B) is clothing.

15. A device for operating a virtual store, comprising: an image data processing apparatus for handling a product (C) in which a specific image (A) is applied to a specific article (B);
a terminal of a virtual store user who intends to purchase or list the product (C);
a terminal of a virtual store operator; and
a server connected to the Internet,
wherein the image data processing apparatus has the following devices 1 to 5 including
(device 1) a device converting image data (A0) corresponding to the image (A) to acquire image data (A1),
(device 2) a device converting image data (B0) corresponding to the article (B) to acquire image data (B1) corresponding to a surface state of a region of the article (B) on which the image (A) is printed,
(device 3) a device acquiring image data (A2) from the image data (A1) and the image data (B1),
(device 4) a device converting the image data (A2) to acquire image data (A3), and
(device 5) a device acquiring image data (C0) corresponding to the product (C) from the image data (A3) and the image data (B0), and
the server displays a sample image of the product (C) on the terminal of the virtual store user based on the image data (C0) obtained by the image data processing apparatus, and transmits and receives information regarding purchase and/or listing of the product (C) between the terminal of the virtual store user and the terminal of the virtual store operator.

16. The device for operating a virtual store according to claim 15,
wherein the device 1 converts a value corresponding to one or more of hue, brightness, chroma, transparency, and sharpness of the image data (A0) corresponding to the image (A) to acquire the image data (A1).

17. The device for operating a virtual store according to claim 15,
wherein the device 1 converts a value corresponding to one or more of brightness, chroma, and transparency of the image data (A0) corresponding to the image (A) to reduce one or more of brightness, chroma, and transparency, thereby acquiring the image data (A1).

18. The device for operating a virtual store according to claim 15,
wherein the device 2 converts the image data (B0) corresponding to the article (B) to acquire the image data (B1) corresponding to unevenness and/or texture of a region of the article (B) to which the image (A) is applied.

19. The device for operating a virtual store according to claim 15,
wherein the device 2 converts color image data included in the image data (B0) corresponding to the article (B) into grayscale image data and/or performs blurring on the image data (B0) to acquire the image data (B1) corresponding to unevenness and/or texture of the region of the article (B) on which the image (A) is printed.

20. The device for operating a virtual store according to claim 15,
wherein the device 3 acquires the image data (A2) that reflects both the image (A) and a surface state of a region of the article (B) to which the image (A) is applied, from the image data (A1) and the image data (B1).

21. The device for operating a virtual store according to claim 15,
wherein the device 3 acquires the image data (A2) that reflects both the image (A) and the region of the article (B) on which the image (A) is printed, from the image data (A1) and the image data (B1).

22. The device for operating a virtual store according to claim 15,
wherein the device 4 converts a value corresponding to one or more of hue, brightness, chroma, transparency, and sharpness of the image data (A2) to acquire the image data (A3).

23. The device for operating a virtual store according to claim 15,
wherein the device 4 converts a value corresponding to one or more of hue, brightness, chroma, transparency, and sharpness of the image data (A2) to increase one or more of brightness, chroma, transparency, and sharpness, thereby acquiring the image data (A3).

24. The device for operating a virtual store according to claim 15,
wherein the device 5 acquires the image data (C0) as a sample image of a made-to-order product obtained by applying the image (A) to the article (B), from the image data (A3) and the image data (B0).

25. The device for operating a virtual store according to claim 15,
wherein the image (A) is selected by the user on the terminal of the user who intends to purchase or list the product (C) in the virtual store.

26. The device for operating a virtual store according to claim 15,
wherein the information regarding purchase and/or listing of the product (C) includes one or more of a size, a quantity, a delivery destination, and a price of the product (C).

27. The device for operating a virtual store according to claim 15,
wherein the article (B) is made of one or more materials selected from a resin, a metal, a ceramic, and a natural material.

28. The device for operating a virtual store according to claim 15,
wherein the article (B) is clothing.
